# EUROPEAN PATENT SPECIFICATION

(11) **EP 3 147 529 B1**
(45) Date of publication and mention of the grant of the patent: **14.12.2022**
(21) Application number: 16190572.4
(22) Date of filing: 26.09.2016
(51) Int. Cl.: F16D 65/12

(54) **DISC BRAKE DISC AND METHOD OF MAKING SUCH DISC**
SCHEIBENBREMSSCHEIBE UND VERFAHREN ZUR HERSTELLUNG SOLCH EINER SCHEIBE
DISQUE DE FREIN À DISQUE ET PROCÉDÉ DE FABRICATION D'UN TEL DISQUE

(30) Priority: 24.09.2015 IT UB20153864
(43) Date of publication of application: 29.03.2017
(73) Proprietor: BREMBO S.p.A., 24035 Curno (BERGAMO) (IT)
(72) Inventor: CARMINATI, Fabiano, I-24035 Curno (BERGAMO) (IT)
(74) Representative: Zanettin, Gianluigi

(56) References cited:
- EP-A1- 1 903 248
- EP-A2- 0 806 331
- EP-A2- 1 128 083
- US-A1- 2008 011 561
- US-A1- 2014 151 166

## Description

### Field of application

The present invention relates to a disc brake disc, in particular of the ventilated type, and a method of making such disc.

### State of the art

A brake disc of a disc braking system of a vehicle comprises an annular structure, or braking band, and a central attachment element, known as a bell, by means of which the disc is fastened to the rotating part of a vehicle suspension, for example a hub. The braking band is provided with opposite braking surfaces suitable for cooperating with friction elements (brake pads), housed in at least one caliper body placed astride said braking band and integral with a non-rotating component of the vehicle suspension. The interaction commanded between the opposite brake pads and the opposite braking surfaces of the braking band determine a braking action as a result of friction which permits the deceleration or stopping of the vehicle.

Generally, brake discs are made of metal, in particular grey cast iron or steel. The bell may be made of the same material as the braking band. However, in order to reduce the overall weight of the disc, the bell is made of a different and lighter material than that used to make the braking band, such as sheet metal or aluminium.

The bell may be made in one piece with the braking band by means of co-moulding techniques, so as to allow the production of the two components in different materials. In some cases, however, this solution may prove excessively complex from a production point of view and thus not worthwhile. Therefore, an alternative widespread solution is to make the bell and the braking band as separate components and subsequently to assemble them to form the final brake disc.

The bell may be connected to the braking band by means of attachment elements, such as screws and bolts, using through attachment seats made directly in the braking band and in the bell. In some cases, however, making through seats on the braking band and on the bell proves operatively too expensive.

An alternative connection method provides for connecting the bell to the braking band at the central hole of the latter by means of a shape coupling.

More specifically, in the thickness of the braking band, in correspondence with the rim defining the central hole of said band, a plurality of circumferentially distributed grooves are made. In turn the bell has an annular anchoring appendage provided externally with a plurality of protrusions designed to fit into said grooves in an interference fit. Operatively, the assembly of the two components is performed by forcing the annular anchoring appendage of the bell inside the central hole so that the protrusions engage the grooves. To ensure proper locking of the bell on the braking band the annular anchoring appendage, once forced into the central hole of the braking band, is made to adhere closely to the braking band by hammering down. This operation brings the prominences to penetrate deep into the grooves, deforming in a radial direction inside them.

This connection method allows secure locking of the bell to the band, but has significant operating limits.

Firstly, the hammering down cannot be performed freely. During its performance, the braking band and the bell must be protected to prevent these components from being deformed. During the hammering down operations the braking band and the bell are encapsulated so that the mechanical stresses are absorbed without causing damage to the two components. This complicates the production process, to the detriment of its economy.

Secondly, this method of connecting the bell requires postponement of some of the finishing operations of the two components to after assembly. If finishing were performed prior to assembly, there would be a risk of spoiling it in the hammering down. This is the case for example of anti-corrosion treatments. This is detrimental to the flexibility of the production process. For example, in the event of needing to differentiate the anti-corrosion treatment between the band and bell, one must work on the assembled disc, alternately screening the two components during the surface treatments.

EP1903248A1 discloses a brake disk. The disk has an air gap located between friction surfaces of the disk, and a brake ring formed as a casting part. A brake ring carrier i.e. flat ring disk, is partially embedded in the ring, where the carrier is a part of a brake torque transmission of the ring on a vehicle hub or wheel. The carrier is arranged in the gap according to maintenance of a ventilation duct, which is arranged on both sides of the carrier. The carrier is molded along an inner circumferential region of the ring, where diameter of the carrier is smaller than diameter of the brake ring.

EP1128083A2 discloses a brake disc. The brake disc has a friction ring and a disc hub. The friction ring is cast and a ring plate-shaped connection element is incorporated during the casting, so that a radial outer section of the connecting element is cast into the radial inner section of the friction ring. The radial inner section of the element is free of the friction ring material. The connection element and the brake disc hub are connected along the radial inner element section.

US2008/011561A1 discloses a brake rotor assembly. The brake rotor assembly for a dual brake disc braking system includes an annular ring having a plurality of teeth. The teeth are disposed radially about a central axis of the annular ring, and extend inward toward the central axis. The teeth are for slideably engaging a hub (wheel end) having a plurality of channels. The annular ring includes a plurality of pins extending outwardly from the annular ring. A friction disc is disposed radially about the annular ring, and is in interlocking engagement with the plurality of pins. The annular ring and the plurality of teeth are integrally cast from a high strength corrosion resistant material having a tensile strength greater than 260 megapascals to resist fracture during high stress braking conditions and high thermal loads. The friction disc is cast around the annular ring from a grey cast iron.

US2014/151166A1 discloses a disc for a brake disc. A brake band is in a first material suitable for the braking action and has at least one extension for coupling to a bell, suitable for coupling the disc to a hub of a vehicle; said coupling extension being a single piece with said brake band and forming a geometric coupling with said bell to transmit the braking action; said geometric coupling being obtained by fusion preferably of the bell on the brake band, said bell being in a second material, the first and second material having a different melting point; said geometric coupling having, circumferentially spaced, first teeth, that axially extend to be tightly received in first axial seats of the bell; wherein said geometric coupling has circumferentially spaced eighth teeth of the band that radially extend circumferentially offset with respect to said first axial teeth and are suitable for being tightly received in eighth radial seats present in the bell.

### Presentation of the invention

The purpose of the present invention is to therefore to eliminate or at least reduce, the drawbacks mentioned above, relative to the prior art by providing a disc for a disc brake that can be made assembling a bell and braking band without requiring work on said band during assembly.

A further purpose of the present invention is to provide a disc brake disc which is simple and economical to produce.

In particular, such purposes are achieved by a disc brake disc comprising a braking band and a support bell. The band and the bell are made separately from each other as separate components and are then connected together to make the disc. The bell is coaxially connected to the braking band at a central hole of said braking band coaxial to an axis of the disc by means of a connection ring which is circumferentially interposed between the braking band and the bell coaxially to the central hole and is intimately connected to the braking band. The connection ring is made by co-moulding with the braking band.

The bell is connected to the connection ring by means of a shape coupling.

Advantageously, the shape coupling extends in a radial direction, preferably along the entire circumferential extension of the connection ring.

The connection ring comprises a toothed annular surface facing radially towards the inside of the disc. The bell is in turn provided with an annular insert portion, which is suitable to insert inside the connection ring and is counter-shaped to the toothed annular surface of the connection ring to engage on it in locking.

The bell may be further connected to the connection ring by an interference fit.

In particular, the bell is partially inserted inside the connection ring. The interface surfaces of the bell and of the connection ring are machined so that during use of the disc between the bell and the connection ring sufficient friction is generated to prevent a relative rotation between the two parts in contact.

The bell may be further connected to the connection ring by welding. Preferably said welding extends for the entire circumferential extension of the interface between the bell and the connection ring.

The bell may be further connected to the connection ring by attachment means, preferably screw-bolts and/or rivets.

In particular, the bell has a widened annular base with a diameter greater than the inner diameter of the connection ring. The widened annular base is placed in abutment against the connection ring. The attachment means connect the bell to the attachment ring at said widened base.

In particular, the bell has a main body which extends starting from the aforesaid widened annular base and is inserted through the connection ring until the widened base is brought into abutment against the latter.

The bell can be connected to the connection ring by interference fit in correspondence of at least one annular portion of the aforesaid widened base.

Preferably, the connection ring and the braking band penetrate each other in a radial direction.

In particular, between the braking band and the connection ring an interface surface is defined having a toothed profile on the extension plane of the braking band orthogonal to the axis of the disc.

Preferably, the braking band is made of grey cast iron or steel.

Preferably, the bell is made of steel or aluminium.

Preferably, the connection ring is made of steel.

Preferably, the braking band is defined by two plates coaxial to the axis of the disk. A first plate is placed on the side of the support bell, while a second plate is placed on the opposite side. The two plates are mutually facing and spaced to form an interspace which during the rotation of the disc is the seat of a flow of air in a centrifugal direction during the rotation movement of said disc. The connection ring is intimately connected to the braking band in correspondence with one of the two plates.

Preferably, the connection ring is intimately connected to the braking band in correspondence with the plate placed on the side of the support bell.

Preferably, the connection ring and the plate penetrate each other in a radial direction.

In particular, the purposes of the present invention are achieved by a method of making a disc brake disc comprising the following steps:
a) preparing a braking band provided with a central hole coaxial to an axis of the disc;
b) preparing a support bell separately from the braking band;
c) connecting the bell to the braking band coaxially to the central hole (3) to assemble the disc.

The braking band is prepared in the step a) with a connection ring intimately connected to it, made by co-moulding with said braking band coaxially to the central hole. The bell is connected to the braking band at said connection ring.

### Description of the drawings

The technical features of the invention can be seen clearly from the content of the claims below, and its advantages will become more readily apparent in the detailed description that follows, made with reference to the appended drawings, illustrating one or more nonlimiting embodiments by way of example only, wherein:
- Figure 1 shows a perspective view of a disc brake disc according to the invention, illustrated in the assembled condition and seen from the side of the support bell;
- Figure 2 is a cross-section view of a part of the disc in figure 1 according to a radial cross-section plane;
- Figure 3 shows a perspective view of a detail of the disc in figure 1, relative to an attachment ring interposed between the bell and the braking band; and

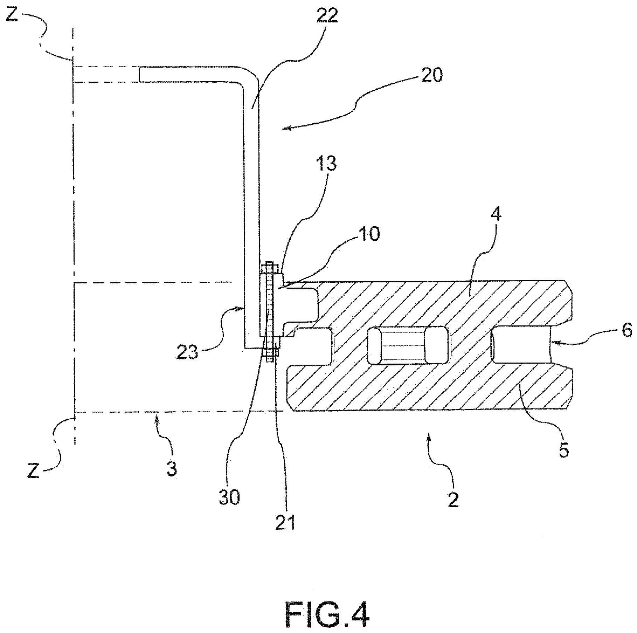

- Figure 4 is a cross-section view of a part of the disc according to an alternative embodiment of the invention, in a radial cross-section plane;

### Detailed description

With reference to the drawings reference numeral 1 globally denotes a disc brake disc according to the invention, intended to be used in a disc brake (not shown) of a vehicle, such as a car.

The disc 1 is a substantially circular shape and extends around an axis indicated in the figures as Z.

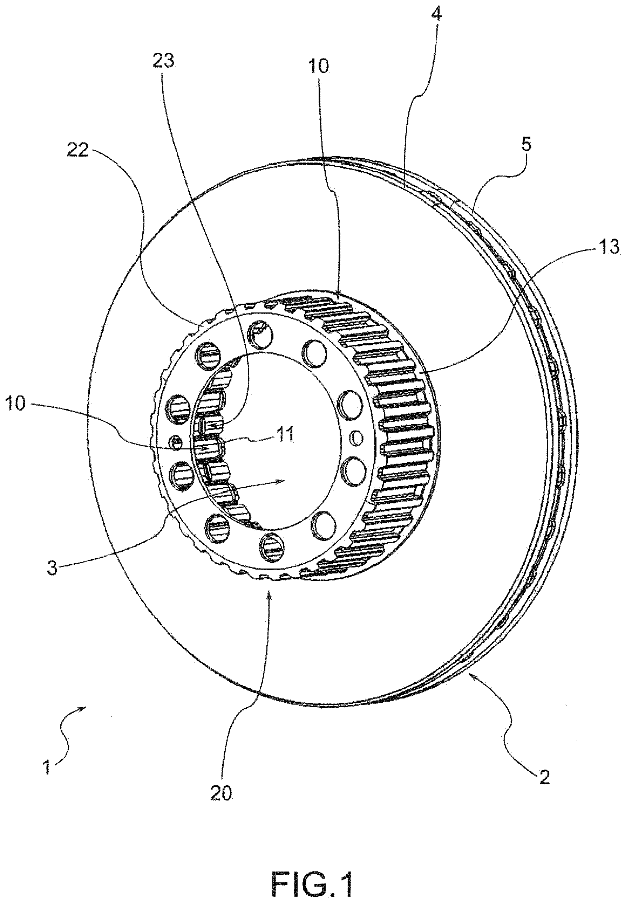

As shown in Figure 1, the disc brake disc 1 comprises:
- a braking band 2 which is provided with a central hole 3 coaxial to an axis Z of the disc 1 orthogonal to the extension plane of the braking band and intended to cooperate with the calipers of the disc brake to exert the braking action on the vehicle; and
- a support bell 20, which is connected to the braking band 2 coaxially to the Z-axis and by means of which the disc 1 is fastened to the rotating part of a vehicle suspension, for example a hub.

The term direction axial to the disk or braking band means a direction parallel to the Z axis. The term direction radial to the disc or braking band means a direction perpendicular to the axial direction or the Z axis. Lastly, the term direction circumferential or tangential to the disc means a direction corresponding to a circumference having its centre on the Z axis.

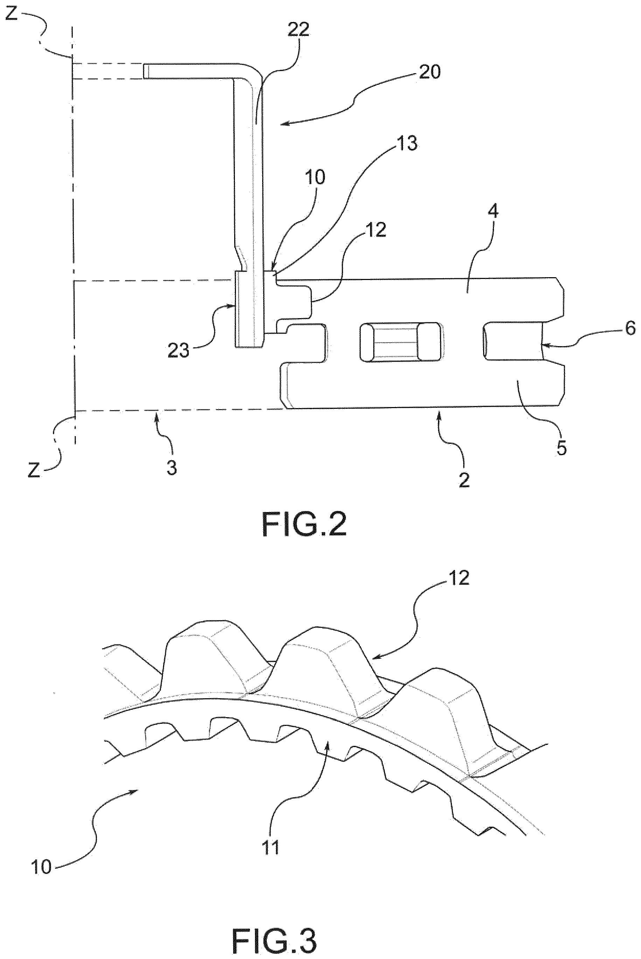

According to a preferred embodiment, the disc 1 is of the ventilated type. As shown in figures 1 and 2, the braking band 2 is defined by two plates 4 and 5 coaxial to the Z axis. A first plate 4 is placed on the side of the support bell 20, while the second plate 5 is placed on the opposite side. The two plates are mutually facing and spaced to form an interspace 6 which during the rotation of the disc is the seat of a flow of air in a centrifugal direction during the rotation movement of said disc.

The braking band 2 and the bell 20 are made separately from each other as separate components and are subsequently connected together to make the disc 1.

According to the invention, the bell 20 is coaxially connected to the braking band 2 at the aforesaid central hole 3 of said braking band 2 by means of a connection ring 10 which is circumferentially interposed between the braking band 2 and the bell 20.

As shown in figures 1 and 2, the connection ring 10 is placed coaxially to the central hole 3 and is intimately connected to the braking band 2.

The connection ring 10 is made by co-moulding with the braking band 2. With respect to the bell 20, which constitutes a separate element from the braking band 2, the connection ring 10 is therefore an integral part of the braking band 2. In particular, the connection ring is made in one piece with the band 2.

As shown in figures 1 and 2, the connection ring 10 may project with respect to the surface of at least one side of the braking band with a portion 13.

According to the preferred embodiment not shown in the appended figures, the connection ring 10 is placed coaxially to the central hole 3 and is intimately connected to one of the two plates 4 and 5 coaxial to the Z axis forming the braking band 2 of the ventilated disc 1.

In particular, the connection ring 10 and the plate 4 or 5 penetrate each other in a radial direction.

Preferably, the connection ring 10 is intimately connected with the plate 4 placed on the side of the support bell 20.

The connection of the connection ring 10 to one of the two plates 4 or 5 of the braking band 2 permits the creation of an anchorage between ring and band throughout the circumferential extension without interruption, thus ensuring greater stability and cohesion between the two components.

The connection of the ring 10 on the plate 4 placed on the side of the support bell 20 prevents the ring 10 and the bell 20 associated with it from interfering with the function of the interspace 6, i.e. with the ventilation flows of said disc.

The bell 20 is connected to the connection ring 10 by means of a shape coupling. This avoids connecting the bell to the braking band directly.

Advantageously, the aforesaid shape coupling extends in a radial direction, preferably along the entire circumferential extension of the connection ring 10.

Functionally, the aforesaid shape coupling must be such as to prevent during use of the disc 1 a relative rotation between the bell 20 and the connection ring 10 (integral with the braking band). In other words, said shape coupling must allow the transmission of torque from the braking band to the bell when braking.

The connection ring 10 comprises a toothed annular surface 11 facing radially towards the inside of the disc 1 on the central hole 3 of the braking band. The bell 20 is in turn provided with an annular insert portion 23, which is suitable to insert itself inside the connection ring 10 and is counter-shaped to the toothed annular surface 11 of the connection ring to engage on it in locking.

The bell 20 has a main body 22 which extends from the aforementioned annular insert portion 23.

The coupling between the annular insert portion 23 and the ring 10 may be made by:
- inserting the main body 22 of the bell 20 through the connection ring 10 up to bring the annular insert portion 23 to engage the ring 10, or
- directly inserting the annular insert portion 23 through the connection ring 10 so as to bring it to engage on the ring 10.

The first mode is preferred since the annular insert portion 23 can be provided with a widened base designed to abut against the ring 10 and thereby defining a locking in the axial direction, as will be described further below.

The bell 20 may be further connected to the connection ring 10 by an interference fit.

More specifically, the bell 20 is partially inserted inside the connection ring 10. The interface surfaces of the bell 20 and of the connection ring 10 are machined so that during use of the disc 1 between the bell 20 and the connection ring 10 sufficient friction is generated to prevent a relative rotation between the two parts in contact. The interference fit must allow the transmission of torque from the braking band to the bell when braking.

The bell 20 may be further connected to the connection ring 10 by welding.

Preferably, said welding extends continuously for the entire circumferential extension of the interface between the bell 20 and the connection ring 10. Alternatively, the welding may be spot welding distributed along the circumferential extension of the interface.

The bell 20 may be further connected to the connection ring 10 by attachment means 30, preferably screw-bolts and/or rivets.

Advantageously, the bell 20 has a widened annular base with a diameter greater than the inner diameter of the connection ring 10. With the disc assembled the widened annular base is placed in abutment against the connection ring 10. The aforementioned attachment means 30 connect the bell 20 to the attachment ring at said widened base. This way a locking of the bell in the axial direction is also achieved.

Advantageously, in addition to the aforesaid attachment means 30, the bell 20 can also connect to the connection ring by means of interference fit between the ring 10 and bell 20 in correspondence of at least an annular portion of the aforesaid widened base and / or of the main body 22 of the bell from which the widened base 21 extends.

The bell 20 has a main body 22 which extends starting from the aforesaid widened annular base 21 and is inserted through the connection ring 10 until the widened base is brought into abutment against the latter.

The main body 22 of the bell 20 may have an axially flared shape which extends starting from the aforesaid widened annular base 21 and have a maximum diameter less than the inside diameter of the connection ring 10. The main body 22 of the bell 20 is inserted through the connection ring 10 until the widened base is brought into abutment against the latter.

Alternatively, the main body 22 of the bell 20 may have an outer surface that is counter-shaped relative to the inner surface of the connection ring. This way, the main body of the bell can engage inside the connection ring (bringing the widened base into abutment) and have at the same time a regular axial extension (cylindrical, parallel to the Z axis), i.e. without a flaring. Advantageously, in the case in which the inner surface of the ring is toothed, this solution also permits a shape coupling between the main body 22 of the bell and the ring 10.

Advantageously, the connection ring 10 and the braking band 2 can penetrate each other in a radial direction. The mutual penetration of the ring and band ensures a greater cohesion between the two parts and thus a greater torque transmission capacity from the braking band to the bell while when braking.

According to the preferred embodiment not shown in the appended figures, between the braking band 2 and the connection ring 10 an interface surface is defined having a toothed profile on the extension plane of the braking band 2. The mutual penetration of the two toothed profiles ensures a greater cohesion between band and ring.

Preferably, the braking band 2 is made of metal, preferably grey cast iron or steel.

Preferably, the bell 20 is made of metal, preferably steel (sheet moulded or by moulding) or aluminium.

Preferably, the connection ring 10 is made of metal, preferably steel by co-moulding with the braking band 2. Alternatively, it may also be made in non-metal material, such as polymer. In particular, the connection ring 10 may be made according to an additive manufacturing technique.

The present invention also relates to a method for making a disc 1 according to the invention and in particular as described above.

Said method comprises the following operating steps:
a) preparing a braking band 2 provided with a central hole 3 coaxial to an axis Z of the disc 1;
b) preparing a support bell 20 separately from the braking band 2;
c) connecting the bell 20 to the braking band 2 coaxially to the central hole 3 to assemble the disc 1.

According to the invention, the braking band 2 is prepared in the step a) with a connection ring 10 intimately connected to it, made by co-moulding with said braking band coaxially to the central hole 3.

The bell 20 is connected to the braking band 2 at said connection ring 10.

The connection methods of the bell 20 to the connection ring 10 have been described previously when describing the disc 1. For brevity they are not described here again, but are understood to also refer to the method of making the disc.

The invention permits numerous advantages to be achieved, in part already described.

The disc brake disc 1 according to the invention can be made by assembling a bell to a braking band, made as separate components, without requiring intervention on said band in the assembly phase. In fact, thanks to the presence of the connection ring interposed between band and bell, the connection between these two parts of the disc does not directly involve the braking band, intervention being confined to the ring.

Unlike the prior art, it is not necessary to provide holes in the braking band for attachment means.

The braking band is not subject to tensions and deformations arising from the hits of the hammering down operations of the bell on the band.

By adopting the solution in which the connection between the ring and the bell is by means of a shape coupling (possibly supported by the contribution of attachment means) it is also possible to assemble bell and band already completely finished. In this solution, in fact, the assembly operations do not modify the surface state of the bell and the braking band. Therefore, at the end of assembly no finishing operations are necessary. This makes it possible to significantly simplify the production process.

The disc according to the invention is therefore simple and economical to produce.

The invention thus conceived thereby achieves the intended objectives.

Obviously, its practical embodiments may assume forms and configurations different from those described while remaining within the sphere of protection of the invention as defined by the appended claims.

Moreover, all the details may be replaced by technically equivalent elements and the dimensions, forms and materials used may be any as needed.

## Claims

1. Disc brake disc comprising a braking band (2) and a bell (20), the braking band (2) and the bell (20) being made separately from each other as separate components and being subsequently connected together to make said disc (1), wherein the bell (20) is connected to the braking band (2) at a central hole (3) of said braking band (2) coaxial to an axis (Z) of the disc (1) by means of a connection ring (10) which is circumferentially interposed between the braking band (2) and the bell (20) coaxially to said central hole (3), said connection ring (10) is intimately connected to the braking band (2), being made by co-moulding with the braking band (2), **characterised in that** the bell (20) is connected to the connection ring (10) by means of a shape coupling,
wherein the connection ring (10) comprises a toothed annular surface (11) facing radially towards the inside of the disc (1) and wherein the bell (20) is provided with an annular insert portion (23), which is suitable to insert inside the connection ring (10) and is counter-shaped to the toothed annular surface (11) of the connection ring to engage on it in locking.

2. Disc according to claim 1, wherein said shape coupling extends in a radial direction, preferably along the entire circumferential extension of the connection ring (10).

3. Disc according to one or more of the previous claims, wherein the bell (20) is further connected to the connection ring (10) by attachment means (30), preferably screw-bolts and/or rivets, and wherein the bell (20) has a widened annular base with a diameter greater than the inner diameter of the connection ring (10), said widened annular base being placed in abutment against the connection ring (10), said attachment means (30) connecting the bell (20) to the attachment ring at said widened base.

4. Disc according to claim 3, wherein the bell (20) has a main body (22) which extends starting from said widened annular base (21) and is inserted through the connection ring (10) with the widened base abutted against the latter.

5. Disc according to claim 3 or 4, wherein said bell (20) is further connected to the connection ring by interference fit in correspondence of at least one annular portion of said widened base.

6. Disc according to one or more of the previous claims, wherein the connection ring (10) and the braking band (2) penetrate each other in a radial direction.

7. Disc according to the previous claim 7, wherein between the braking band (2) and the connection ring (10) an interface surface is defined having a toothed profile on the extension plane of the braking band (2) orthogonal to the axis (Z) of the disc (1).

8. Disc according to one or more of the previous claims, wherein the connection ring (10) is made of steel.

9. Disc according to one or more of the previous claims, wherein the connection ring (10) is made according to an additive manufacturing technique.

10. Disc according to one or more of the previous claims wherein the braking band (2) is defined by two plates (4, 5) coaxial to the axis (Z) of the disc (1), a first plate (4) being placed on the side of the support bell (20), a second plate (5) being placed on the opposite side, said two plates being mutually facing and spaced to form an interspace (6) which during the rotation of the disc is the seat of a flow of air in a centrifugal direction during the rotation movement of said disc, said connection ring (10) being intimately connected to the braking band (2) in correspondence with one of said two plates (4, 5), preferably in correspondence with the plate (4) placed on the side of the support bell (20), preferably the connection ring (10) and the plate (4,5) penetrating each other in a radial direction.

11. Method of making a disc for a disc brake according to one or more of the preceding claims, comprising the following operating steps:
a) preparing a braking band (2) provided with a central hole (3) coaxial to an axis (Z) of the disc (1);
b) preparing a support bell (20) separately from the braking band (2);
c) connecting the bell (20) to the braking band (2) coaxially to said central hole (3) to assemble said disc (1)
**characterised in that** the braking band (2) is prepared in the step a) with a connection ring (10) intimately connected to it, made by co-moulding with the said braking band coaxially to said central hole (3) and **in that** the bell (20) is connected to the braking band (2) at said connection ring (10) by means of a shape coupling,
wherein the connection ring (10) comprises a toothed annular surface (11) facing radially towards the inside of the disc (1) and wherein the bell (20) is provided with an annular insert portion (23), which is suitable to insert inside the connection ring (10) and is counter-shaped to the toothed annular surface (11) of the connection ring to engage on it in locking.

## Patentansprüche

1. Scheibenbremsenscheibe, umfassend ein Bremsband (2) und eine Glocke (20), wobei das Bremsband (2) und die Glocke (20) separat voneinander als separate Komponenten hergestellt und anschließend miteinander verbunden werden, um die Scheibe (1) herzustellen, wobei die Glocke (20) mit dem Bremsband (2) an einem zentralen Loch (3) des Bremsbandes (2) koaxial zu einer Achse (Z) der Scheibe (1) mittels eines Verbindungsrings (10) verbunden ist, welcher in Umfangsrichtung zwischen dem Bremsband (2) und der Glocke (20) koaxial zu dem zentralen Loch (3) eingefügt ist, wobei der Verbindungsring (10) eng mit dem Bremsband (2) verbunden ist, durch Co-Formen mit dem Bremsband (2) hergestellt,
**dadurch gekennzeichnet, dass** die Glocke (20) mittels einer Formkopplung mit dem Verbindungsring (10) verbunden ist,
wobei der Verbindungsring (10) eine gezahnte Ringfläche (11) umfasst, welche radial in Richtung der Innenseite der Scheibe (1) weist, und wobei die Glocke (20) mit einem ringförmigen Einsatzabschnitt (23) bereitgestellt ist, welcher dazu geeignet ist, innerhalb des Verbindungsrings (10) eingesetzt zu werden und zu der verzahnten Ringfläche (11) des Verbindungsrings gegengeformt ist, um damit in einem Verriegeln einzugreifen.

2. Scheibe nach Anspruch 1, wobei sich die Formkopplung in einer radialen Richtung, vorzugsweise entlang der gesamten Umfangserstreckung des Verbindungsrings (10), erstreckt.

3. Scheibe nach einem oder mehreren der vorhergehenden Ansprüche, wobei die Glocke (20) ferner mit dem Verbindungsring (10) durch Anbringungsmittel (30), vorzugsweise Schraubbolzen und/oder Niete, verbunden ist, und wobei die Glocke (20) eine erweiterte ringförmige Basis mit einem Durchmesser aufweist, welcher größer als der Innendurchmesser des Verbindungsrings (10) ist, wobei die erweiterte ringförmige Basis in Anlage gegen den Verbindungsring (10) platziert ist, wobei die Anbringungsmittel (30) die Glocke (20) an der erweiterten Basis mit dem Anbringungsring verbinden.

4. Scheibe nach Anspruch 3, wobei die Glocke (20) einen Hauptkörper (22) aufweist, welcher sich ausgehend von der erweiterten ringförmigen Basis (21) erstreckt und durch den Verbindungsring (10) eingesetzt ist, wobei die erweiterte Basis gegen den letzteren angelegt ist.

5. Scheibe nach Anspruch 3 oder 4, wobei die Glocke (20) ferner mit dem Verbindungsring durch eine Presspassung in Übereinstimmung wenigstens eines ringförmigen Abschnitts der erweiterten Basis verbunden ist.

6. Scheibe nach einem oder mehreren der vorhergehenden Ansprüche, wobei der Verbindungsring (10) und das Bremsband (2) in einer radialen Richtung einander durchdringen.

7. Scheibe nach dem vorhergehenden Anspruch 7, wobei zwischen dem Bremsband (2) und dem Verbindungsring (10) eine Schnittstellenfläche definiert ist, welche ein gezahntes Profil an der Erstreckungsebene des Bremsbandes (2) orthogonal zu der Achse (Z) der Scheibe (1) aufweist.

8. Scheibe nach einem oder mehreren der vorhergehenden Ansprüche, wobei der Verbindungsring (10) aus Stahl hergestellt ist.

9. Scheibe nach einem oder mehreren der vorhergehenden Ansprüche, wobei der Verbindungsring (10) gemäß einer Technik einer additiven Fertigung hergestellt ist.

10. Scheibe nach einem oder mehreren der vorhergehenden Ansprüche, wobei das Bremsband (2) durch zwei Platten (4, 5) definiert ist, welche koaxial zu der Achse (Z) der Scheibe (1) sind, wobei eine erste Platte (4) an der Seite der Halterungsglocke (20) platziert ist, wobei eine zweite Platte (5) an der entgegengesetzten Seite platziert ist, wobei die beiden Platten einander zugewandt und beabstandet sind, um einen Zwischenraum (6) zu bilden, welcher während der Rotation der Scheibe die Aufnahme einer Strömung von Luft in einer zentrifugalen Richtung während der Rotationsbewegung der Scheibe ist, wobei der Verbindungsring (10) in Übereinstimmung mit einer der beiden Platten (4, 5), vorzugsweise in Übereinstimmung mit der Platte (4), welche an der Seite der Halterungsglocke (20) platziert ist, eng mit dem Bremsband (2) verbunden ist, wobei vorzugsweise der Verbindungsring (10) und die Platte (4, 5) in einer radialen Richtung einander durchdringen.

11. Verfahren zur Herstellung einer Scheibe für eine Scheibenbremse nach einem oder mehreren der vorhergehenden Ansprüche, umfassend die folgenden Arbeitsschritte:
a) Vorbereiten eines Bremsbandes (2), welches mit einem zentralen Loch (3) koaxial zu einer Achse (Z) der Scheibe (1) bereitgestellt ist;
b) Vorbereiten einer Halterungsglocke (20) separat von dem Bremsband (2);
c) Verbinden der Glocke (20) mit dem Bremsband (2) koaxial zu dem zentralen Loch (3), um die Scheibe (1) zusammenzusetzen,
**dadurch gekennzeichnet, dass** das Bremsband (2) in dem Schritt a) mit einem Verbindungsring (10) vorbereitet wird, welcher eng damit verbunden wird, hergestellt durch Co-Formen mit dem Bremsband koaxial zu dem zentralen Loch (3), und dadurch, dass die Glocke (20) mit dem Bremsband (2) an dem Verbindungsring (10) mittels einer Formkopplung verbunden wird,
wobei der Verbindungsring (10) eine gezahnte Ringfläche (11) umfasst, welche radial in Richtung der Innenseite der Scheibe (1) weist, und wobei die Glocke (20) mit einem ringförmigen Einsatzabschnitt (23) bereitgestellt wird, welcher dazu geeignet ist, innerhalb des Verbindungsrings (10) eingesetzt zu werden und zu der verzahnten Ringfläche (11) des Verbindungsrings gegengeformt ist, um damit in einem Verriegeln einzugreifen.

## Revendications

1. Disque de frein à disque comprenant une bande de freinage (2) et une cloche (20), la bande de freinage (2) et la cloche (20) étant fabriquées séparément l'une de l'autre en tant que composants séparés et étant par la suite reliées ensemble pour fabriquer ledit disque (1), dans lequel la cloche (20) est raccordée à la bande de freinage (2) au niveau d'un trou central (3) de ladite bande de freinage (2) de manière coaxiale par rapport à un axe (Z) du disque (1) au moyen d'une bague de raccordement (10) qui est interposée de manière circonférentielle entre la bande de freinage (2) et la cloche (20) de manière coaxiale par rapport audit trou central (3), ladite bague de raccordement (10) est raccordée intimement à la bande de freinage (2), étant fabriquée par co-moulage avec la bande de freinage (2), **caractérisé en ce que** la cloche (20) est raccordée à la bague de raccordement (10) au moyen d'un accouplement de formes,
dans lequel la bague de raccordement (10) comprend une surface annulaire dentée (11) tournée radialement vers l'intérieur du disque (1) et dans lequel la cloche (20) est pourvue d'une partie d'insert annulaire (23), qui est adaptée pour s'insérer à l'intérieur de la bague de raccordement (10) et est contre-façonnée par rapport à la surface annulaire dentée (11) de la bague de raccordement pour s'engager sur celle-ci lors du verrouillage.

2. Disque selon la revendication 1, dans lequel ledit accouplement de formes s'étend dans une direction radiale, de préférence le long de toute l'extension circonférentielle de la bague de raccordement (10).

3. Disque selon l'une ou plusieurs des revendications précédentes, dans lequel la cloche (20) est en outre raccordée à la bague de raccordement (10) par des moyens de fixation (30), de préférence des boulons filetés et/ou rivets, et dans lequel la cloche (20) présente une base annulaire élargie avec un diamètre supérieur au diamètre intérieur de la bague de raccordement (10), ladite base annulaire élargie étant placée en butée contre la bague de raccordement (10), lesdits moyens de fixation (30) raccordant la cloche (20) à la bague de fixation au niveau de ladite base élargie.

4. Disque selon la revendication 3, dans lequel la cloche (20) présente un corps principal (22) qui s'étend en partant de ladite base annulaire élargie (21) et est inséré à travers la bague de raccordement (10) avec la base élargie en butée contre cette dernière.

5. Disque selon la revendication 3 ou 4, dans lequel ladite cloche (20) est raccordée en outre à la bague de raccordement par ajustement avec serrage en correspondance avec au moins une partie annulaire de ladite base élargie.

6. Disque selon l'une ou plusieurs des revendications précédentes, dans lequel la bague de raccordement (10) et la bande de freinage (2) se pénètrent mutuellement dans une direction radiale.

7. Disque selon la revendication précédente 7, dans lequel une surface d'interface présentant un profil denté sur le plan d'extension de la bande de freinage (2) perpendiculairement à l'axe (Z) du disque (1) est définie entre la bande de freinage (2) et la bague de raccordement (10).

8. Disque selon l'une ou plusieurs des revendications précédentes, dans lequel la bague de raccordement (10) est faite d'acier.

9. Disque selon l'une ou plusieurs des revendications précédentes, dans lequel la bague de raccordement (10) est fabriquée selon une technique de fabrication additive.

10. Disque selon l'une ou plusieurs des revendications précédentes dans lequel la bande de freinage (2) est définie par deux plaques (4, 5) coaxiales par rapport à l'axe (Z) du disque (1), une première plaque (4) étant placée sur le côté de la cloche (20) de support, une seconde plaque (5) étant placée sur le côté opposé, lesdites deux plaques étant mutuellement en vis-à-vis et espacées pour former un espace intermédiaire (6) qui pendant la rotation du disque est le siège d'un écoulement d'air dans une direction centrifuge pendant le mouvement de rotation dudit disque, ladite bague de raccordement (10) étant raccordée intimement à la bande de freinage (2) en correspondance avec une desdites deux plaques (4, 5), de préférence en correspondance avec la plaque (4) placée sur le côté de la cloche (20) de support, de préférence la bague de raccordement (10) et la plaque (4, 5) se pénétrant mutuellement dans une direction radiale.

11. Procédé de fabrication d'un disque pour un disque de frein selon l'une ou plusieurs des revendications précédentes, comprenant les étapes de fonctionnement suivantes :
a) la préparation d'une bande de freinage (2) pourvue d'un trou central (3) coaxial par rapport à un axe (Z) du disque (1) ;
b) la préparation d'une cloche (20) de support séparément de la bande de freinage (2) ;
c) le raccordement de la cloche (20) à la bande de freinage (2) de manière coaxiale par rapport audit trou central (3) pour assembler ledit disque (1)
**caractérisé en ce que** la bande de freinage (2) est préparée dans l'étape a) avec une bague de raccordement (10) raccordée intimement à celle-ci, fabriquée par co-moulage avec ladite bande de freinage de manière coaxiale par rapport audit trou central (3) et **en ce que** la cloche (20) est raccordée à la bande de freinage (2) au niveau de ladite bague de raccordement (10) au moyen d'un accouplement de formes,
dans lequel la bague de raccordement (10) comprend une surface annulaire dentée (11) tournée radialement vers l'intérieur du disque (1) et dans lequel la cloche (20) est pourvue d'une partie d'insert annulaire (23), qui est adaptée pour s'insérer à l'intérieur de la bague de raccordement (10) et est contre-façonnée par rapport à la surface annulaire dentée (11) de la bague de raccordement pour s'engager sur celle-ci lors du verrouillage.
